# FASCICULE DE BREVET EUROPEEN

(11) **EP 0 452 764 B1**
(45) Date de publication et mention de la délivrance du brevet: **02.06.1993**
(21) Numéro de dépôt: 91105507.7
(22) Date de dépôt: 08.04.1991
(51) Int. Cl.: B31B 1/02, B65G 15/44, B65H 5/16

(54) **Taquet pour station de registre de feuilles dans une machine de production d'emballages**
Mitnehmer für Blätterpositionierungsstation in einer Maschine zum Herstellen von Packungen
Block for sheet registering station in a package production machine

(30) Priorité: 19.04.1990 CH 1326/90
(43) Date de publication de la demande: 23.10.1991
(73) Titulaire: BOBST S.A., CH-1001 Lausanne (CH)
(72) Inventeur: Godi, Claude André, CH-1033 Cheseaux (CH)
(74) Mandataire: Colomb, Claude

(56) Documents cités:
- DE-A- 2 460 103
- DE-A- 3 316 518
- DE-A- 3 447 703
- DE-C- 517 295
- FR-A- 2 448 975
- US-A- 2 236 747
- US-A- 4 637 524

## Description

La présente invention a trait à une station de registre, c'est-à-dire de positionnement par taquage d'éléments en forme de plaque, tels que feuilles de carton ou similaires, dans une machine de production d'emballages.

Lors de la production d'emballages, par exemple en carton ondulé, des feuilles sont prises d'une pile et amenées individuellement dans une station suivante de travail, par exemple de découpage et/ou de formage.

Une façon de réaliser le transport de chaque feuille successive, depuis la pile jusqu'à la station de travail, consiste à pousser la feuille à l'aide de deux taquets mobiles prenant appui contre le bord arrière - ou amont - de la feuille, ces taquets arrière étant montés chacun sur une courroie crantée sans fin. Toutefois, étant donné qu'il est difficile de centrer la pile de feuilles sur l'axe central longitudinal de la machine, les feuilles transitent, entre la pile et la station de travail, au travers d'une station dite de registre - ou taquage latéral - qui a donc pour fonction de positionner transversalement, c'est-à-dire perpendiculairement au sens de déplacement, chaque feuille successive de manière à ce qu'elle occupe la position souhaitée par rapport aux outils de travail de la station qui suit. Dans ce but, la station de taquage comprend, sur au moins un côté latéral, une règle de référence ou de taquage contre laquelle le bord latéral correspondant de la feuille en mouvement vient buter. La règle de taquage possède donc une surface de guidage parallèle au déplacement de la feuille, c'est-à-dire à l'axe longitudinal de la machine, et peut être transversalement positionnée. Le déplacement transversal de la feuille, pour l'amener au contact de la règle de taquage, est généralement obtenu au moyen de galets - libres ou entraînés - dits inclinés, c'est-à-dire dont la vitesse de rotation périphérique a une composante transversale, et en contact avec la face supérieure de la feuille.

Etant donné que, jusqu'à ce jour, chaque taquet arrière prend appui sur le bord de la feuille au moyen d'une surface de contact lisse, perpendiculaire au déplacement de la feuille, il s'est avéré qu'à l'instant où ce taquet, entraîné en mouvement par la courroie, vient buter contre le carton, la force de frottement à leur point de contact entraîne les inconvénients suivants, à savoir :
- un léger déplacement transversal de la courroie dont un bord latéral vient ainsi frotter relativement fortement contre son guidage latéral correspondant; étant donné la haute vitesse de déplacement de la courroie (300 m/minute), ce frottement entraîne une usure et une détérioration rapide de la courroie, et donc son remplacement;
- un déséquilibrage en position de la feuille; en effet, étant donné que le déplacement transversal de taquage peut aller, par exemple, jusqu'à 15 mm, l'action combinée des forces de frottement au niveau des taquets arrière et des galets inclinés, provoque une sorte de rotation de la feuille sur elle-même, rotation qui, bien sûr, est préjudiciable à la suite des opérations puisqu'elle s'oppose à un correct taquage latéral.

La présente invention a donc pour but de réaliser une station de taquage qui évite les risques mentionnés ci-dessus, c'est à dire dans laquelle les taquets arrière assurent un taquage ou positionnement longitudinal correct de la feuille sans introduire des forces perturbatrices du taquage latéral.

Ce but est atteint grâce à un dispositif selon la revendication 1 et à un taquet arrière selon la revendication 8.

D'autres caractéristiques avantageuses et avantages de l'invention ressortiront du mode d'exécution d'un exemple de réalisation décrit ci-après en vue d'en faciliter la compréhension et en référence au dessin annexé dans lequel :
- la figure 1 montre une vue de dessus, en coupe partielle, d'une portion de courroie munie d'un taquet arrière utilisé dans une station de registre par taquage; et
- la figure 2 est une vue en coupe selon A - A de la figure 1.

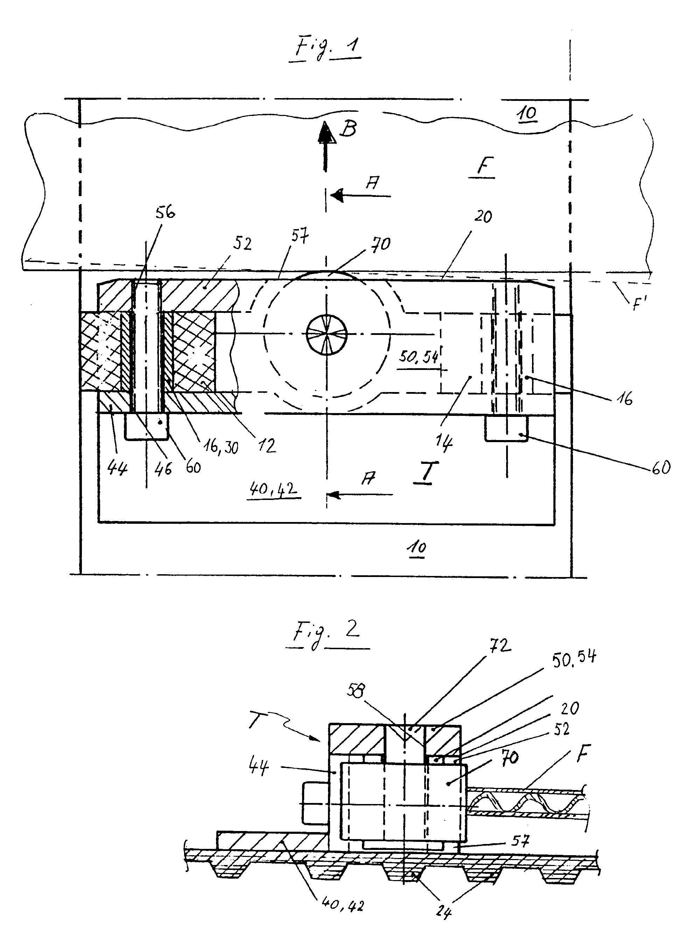

Une station de registre par taquage comprend, de façon connue, au moins deux courroies 10 parallèles l'une par rapport à l'autre et formant chacune une boucle fermée. Sur la courroie 10 sont montés, régulièrement espacés, des taquets T (dont un seul est représenté dans la figure 1) possédant chacun une surface 20 destinée à venir en appui contre le bord arrière ou amont d'une feuille F. La courroie est entraînée de façon connue et en synchronisme avec les autres mouvements de la machine, de façon à ce que le taquet arrière T puisse réaliser le positionnement de la feuille en mouvement dans le sens B de l'axe de la machine.

Chaque taquet arrière T comprend deux blocs parallélépipédiques 12, 14 identiques et transversalement espacés sur la courroie 10. Ces deux blocs 12, 14 sont en polyuréthane et fixé par vulcanisation sur le côté opposé et le long d'une dent 24 de la courroie crantée 10. Chaque bloc 12, 14 est muni d'un alésage 16 orienté dans le sens de la courroie et dans lequel est introduit une douille métallique 30 dont la longueur est légèrement inférieure à celle de l'alésage 16. Le taquet T comprend une première équerre métallique 50 dont une première aile 52, formant la surface d'appui 20, vient en contact avec la face avant ou aval de chaque bloc 12 et dont une seconde aile 54 vient en contact avec la face supérieure des blocs 12, 14. Le taquet T comprend aussi une deuxième équerre métallique 40 dont une première aile 42 est en contact avec la courroie 10 et dont la seconde aile 44 est en contact avec la face des deux blocs 12, 14 opposée à la face d'appui 20, la hauteur de la seconde aile 44 étant légèrement inférieure à celle des blocs 12, 14. Les deux équerres 40, 50, qui s'étendent à peu près sur toute la largeur de la courroie 10, sont munies de deux trous 46, respectivement deux taraudages 56, de manière à ce qu'il soit possible, à l'aide de deux vis 60 dont chacune traverse le trou 46, la douille 16 et dont l'extrémité est en prise avec le taraudage 56, de fixer, à la manière d'une pince, les deux équerres 40, 50 sur les deux blocs 12, 14. Il est à remarquer que l'aile 42 de la deuxière équerre 40 a pour fonction de répartir, sur une plus grande surface de la courroie 10, la force résultant d'un basculement du taquet T provoqué par l'action d'une feuille F sur la face d'appui 20.

L'aile supérieure 54 de la première équerre 50 est munie en son centre d'un orifice 58 perpendiculaire à la courroie 10 et dans lequel est monté rivé l'axe 72 d'un galet libre 70. La dimension et la disposition des deux blocs 12, 14, des deux équerres 40, 50 et du galet 70 sont telles que ce dernier peut prendre place dans l'espace situé entre la courroie 10 et l'aile supérieure 54 de la deuxième équerre 50, l'aile 52 de cette dernière étant munie d'une ouverture 57 par laquelle une légère portion de la périphérie du galet 70 émerge hors de la surface d'appui 20 sur environ 1 mm.

Des figures 1 et 2, il est aisé de voir que le galet 70 va annuler ou tout au moins fortement diminuer les forces de frottement entre le taquet T et la feuille F, forces qui ont donc l'inconvénient de s'opposer à un déplacement transversal de cette dernière, c'est-à-dire perpendiculairement au sens de déplacement B. De plus, de façon surprenante, même si la surface d'appui 20 n'est pas exactement perpendiculaire au bord amont du carton F, comme cela est représenté en traits discontinus F' dans la figure 1, le galet 70 garde toujours toute son efficacité. D'autre part, il s'est avéré que, même si le galet 70 entraîne, du fait qu'il va légèrement s'enfoncer - à cause de sa surface d'appui relativement réduite - à l'intérieur du bord de la feuille F, une certaine indétermination ou imprécision du taquage ou positionnement de la feuille selon l'axe de la machine, cette imprécision est largement compensée par la facilité et la sûreté que le galet 70 apporte dans le déplacement transversal de la feuille pour le taquage latéral.

Il est évident que de nombreuses modifications peuvent être faites au mode de réalisation décrit ci-dessus sans sortir du cadre de l'invention. Ainsi, par exemple, des vis ou des rivets peuvent être utilisés pour fixer les deux blocs 12, 14 à la courroie 10. Des chaînes sans fin peuvent être utilisées à la place des courroies 10 ...etc.

## Revendications

1. Dispositif de registre par taquage longitudinal et latéral de feuille dans une machine de production d'emballages dans laquelle les feuilles sont successivement prises d'une pile et amenées à plat en direction d'une station suivante de travail tel que découpage ou impression, ledit dispositif étant disposé entre la pile et la machine de travail, et comprenant :
- au moins un taquet mobile (T) monté sur une courroie crantée ou similaire (10) à boucle fermée, et muni d'une surface d'appui (20) destinée à prendre appui contre le bord amont de la feuille (F) pour pousser et positionner cette dernière dans le sens de l'axe longitudinal de la machine de travail;
- des moyens pour entraîner la feuille (F) dans une direction perpendiculaire à l'axe de la machine en vue de réaliser son taquage latéral; et
- une règle ou similaire de taquage latéral;
caractérisé en ce que le taquet (T) comprend au moins un galet (70) dont l'axe de rotation est situé essentiellement perpendiculairement à la feuille (F) et dont une légère portion de sa périphérie émerge hors de la surface d'appui (20) et est destinée à venir en appui contre le bord amont de la feuille (F).

2. Dispositif selon la revendication 1, caractérisé en ce que le taquet (T) comprend au moins un bloc parallélépipédique (12 et/ou 14) en polyuréthane ou similaire, fixé par vulcanisation sur la courroie (10), et que le taquet (T) comprend une première équerre (50) transversalement fixée, à l'aide de vis ou similaire (60), au bloc (12, 14) et comprenant deux ailes (52, 54) dont une (52) s'étendant essentiellement perpendiculairement à la courroie (10), forme la surface d'appui (20) et dont l'autre (54) s'étendant essentiellement parallèlement à la courroie (10), est munie d'un orifice (58) dans lequel est monté l'axe (72) du galet (70), l'aile (52) qui forme la surface d'appui (20) étant munie d'une ouverture (57) par laquelle ladite légère portion du galet (70) peut émerger.

3. Dispositif selon la revendication 2, caractérisé en ce que le taquet (T) comprend une deuxième équerre (40) transversalement fixée à l'aide de vis (60) au bloc (12 et/ou 14) et comprenant deux ailes (42, 44) dont une (44) est en contact avec une face du bloc (12, 14) opposée à la surface d'appui (20) et dont l'autre (42) est en contact avec la courroie (10).

4. Dispositif selon la revendication 3, caractérisé en ce que le taquet (T) comprend deux blocs (12, 14) fixés sur chaque côté latéral de la courroie (10) et entre lesquels est situé le galet (70), la fixation des deux équerres (40, 50), à l'aide des vis (60), étant telle que les équerres (40, 50) sont pressées l'une en direction de l'autre et à l'encontre de la face correspondante des blocs (12, 14).

5. Dispositif selon la revendication 4, caractérisé en ce que chaque bloc (12, 14) est muni d'un trou (16) dans lequel est introduite une douille métallique (30), chaque vis (60) traverse successivement un trou (46) d'une équerre (42) et la douille (30), son extrémité étant en prise avec un taraudage (56) réalisé dans l'autre équerre (50).

6. Dispositif selon l'une des revendications 2 à 5, caractérisé en ce que l'axe (72) du galet (70) est monté rivé dans l'orifice (58) de l'équerre (50).

7. Dispositif selon l'une des revendications précédentes, caractérisé en ce que le galet (70) émerge d'environ 1 mm par rapport à la surface d'appui (20).

8. Taquet pour station de registre dans une machine de production d'emballages, comprenant une surface (20) destinée à venir en appui contre le bord amont d'une feuille pour pousser cette dernière dans la direction de l'axe de la machine, caractérisé en ce que le taquet (T) comprend un galet (70) dont une petite portion de la périphérie émerge hors de la surface d'appui (20) et est destinée à venir en appui contre ledit bord amont.

## Patentansprüche

1. Vorrichtung zum Anlegen von Bogen durch Längs- und seitliches Ausrichten in einer Verpackungsherstellmaschine, in welcher die Bogen nacheinander von einen Stapel entnommen und in flacher Lage einer nachfolgenden Bearbeitungsstation, zum Beispiel zum Stanzen oder Bedrucken, zugeführt werden, wobei die erwähnte Vorrichtung zwischen Stapel und Bearbeitungsmaschine angeordnet ist und
- wenigstens eine bewegliche Anlegemarke (T) auf einem gezahnten oder ähnlichen Riemen (10) mit geschlossenem Kreislauf und einer Auflagefläche (20) zum Anlegen an den hinteren Rand des Bogens (F) zwecks Stossen und Anordnen desselben in der Richtung der Längsachse der Bearbeitungsmaschine,
- Mittel zum Antrieb des Bogens (F) in Querrichtung in bezug auf die Maschinenachse zum seitlichen Anlegen und
- eine seitliche Anlegeskala order ähnliche Vorrichtung
umfasst, dadurch gekennzeichnet, dass die Anlegemarke (T) wenigstens eine Rolle (70) umfasst, deren Rotationsachse sozusagen rechtwinklig zum Bogen (F) angeordnet ist und wovon ein geringer Teil der Peripherie aus der Berührungsfläche (20) herausragt und sich am hinteren Rand des Bogens (F) anlegen soll.

2. Vorrichtung gemäss Patentanspruch 1, dadurch gekennzeichnet, dass die Anlegemarke (T) wenigstens ein durch Vulkanisierung auf dem Riemen (10) angebrachtes parallelepipedisches Stück (12 und/oder 14) aus Polyurethan oder ähnlichem umfasst, und dass die Anlegemarke (T) einen ersten Stoff mit Hilfe von Schrauben (60) oder der gleichen quer am Stück (12, 14) befestigten Winkel (50) mit zwei Flügeln (52, 54) umfasst, wovon ein (52) sich weitgehend rechtwinklig zum Riemen (10) erstreckender die Anlegefläche (20) bildet, während der andere (54) sich weitgehend parallel zum Riemen (10) erstreckende Flügel mit einer Öffnung (58) versehen ist, in welcher die Achse (72) der Rolle (70) befestigt wird, wobei der die Berürungsfläche (20) bildende Flügel (52) mit einer Öffnung (57) versehen ist, durch welche der besagte geringe Teil der Rolle (70) herausragen kann.

3. Vorrichtung gemäss Patentanspruch 2, dadurch gekennzeichnet, dass die Anlegemarke (T) einen zweiten mit Hilfe der Schrauben (60) quer am Stück (12 und/oder 14) befestigten Winkel (40) mit zwei Flügel (42, 44) umfasst, wovon einer (44) mit einer Seite des Stücks (12, 14) gegenüber der Berührungsfläche (20), während der andere (42) mit dem Riemen (10) in Berührung steht.

4. Vorrichtung gemäss Patentanspruch 3, dadurch gekennzeichnet, dass die Anlegemarke (T) zwei an den beiden Seiten des Riemens (10) befestigte Stücke (12, 14) aufweist, zwischen welchen die Rolle (70) angeordnet ist, wobei die Befestigung der Winkel (40, 50) mit Hilfe der Schrauben (60) so gewählt wird, dass die Winkel (40, 50) gegeneinander und gegen die entsprechende Seite der Stücke (12, 14) gedrückt werden.

5. Vorrichtung gemäss Patentanspruch 4, dadurch gekennzeichnet, dass jedes Stück (12, 14) mit einem Loch (16) versehen ist, in welches eine metallische Buchse (30) eingesetzt wird und jede Schraube (60) nacheinander ein Loch (46) eines Winkels (42) und die Buchse (30) durchquert, wobei deren Ende mit einem im anderen Winkel (50) angebrachten Innengewinde (56) im Eingriff steht.

6. Vorrichtung gemäss einem der Patentansprüche 2 bis 5, dadurch gekennzeichnet, dass die Achse (72) der Rolle (70) in der Öffnung (58) des Winkels (50) vernietet ist.

7. Vorrichtung gemäss einem der vorerwähnten Patentansprüche, dadurch gekennzeichnet, dass die Rolle (70) in bezug auf die Auflagefläche (20) ungefähr 1 mm herausragt.

8. Anlegemarke für eine Anlegevorrichtung in einer Verpackungsherstellmaschine mit einer Fläche (20) zum Anlegen an den hinteren Rand eines Bogens zum Stossen desselben in der Richtung der Maschinenachse, dadurch gekennzeichnet, dass die Anlegemarke (T) eine Rolle (70) umfasst, von welcher ein geringer Teil der Peripherie aus der Auflagefläche (20) herausragt und am besagten hinteren Rand anlegen soll.

## Claims

1. Sheet aligning device with front lays and side guides in a package producing machine in which the sheets are successively taken from a pile and moved flat towards the subsequent processing station, for instance for die-cutting or printing, the said device being arranged between the pile and the processing machine, and comprising:
- at least one movable guide (T) fitted on an endless belt (10), toothed or similar, and provided with a supporting surface (20) destined to stop the upstream edge of the sheet (F) in order to push and position the latter along the lengthwise axis of the processing machine;
- means for moving the sheet (F) perpendicularly to the machine axis in order to provide sidewise aligning; and
- a ruler or similar for sidewise aligning;
characterised by the guide (T) comprising at least one roller (70) the rotary axle of which is situated essentially perpendicular to the sheet (F) and of which a small portion of its periphery exceeds the supporting surface (20) and has for purpose to act as a guide for the upstream edge of the sheet (F).

2. Device according to claim 1 characterised by the fact that the guide (T) includes at least a parallelepipedic block (12 and/or 14) of polyurethan or similar, vulcanized onto the belt (10), and that the guide (T) comprises a first square (50) fastened crosswise on the block (12, 14) by means of screws (60) or similar and including two wings (52, 54) of which one (52) extending essentially perpendicularly to the belt (10) makes up the supporting surface (20), whereas the other one (54) extending essentially parallelly to the belt (10) is provided with an orifice (58) in which is fitted the axle (72) of the roller (70), the wing (52) making up the supporting surface (20) being provided with an aperture (57) through which the said small portion of the roller (70) will be able to protrude.

3. Device according to claim 2, characterised by the fact that the guide (T) comprises a second square (40) fastened on the block (12 and/or 14) crosswise by means of screws (60) and including two wings (42, 44) of which one (44) is in contact with a side of the block (12, 14) opposite the supporting surface (20), whereas the other one (42) is in contact with the belt (10).

4. Device according to claim 3, characterised by the fact that the guide (T) comprises two blocks (12, 14) fitted on either side of the belt (10) and between which is situated the roller (70), the two squares (40, 50) being fitted by means of the screws (60) in such a way that the squares (40, 50) are pressed one against the other and also against the corresponding side of the blocks (12, 14).

5. Device according to claim 4, characterised by the fact that each block (12, 14) is provided with a hole (16) allowing to insert a metal bushing (30), each screw (60) passing successively through a hole (46) of a square (42) and the bushing (30) as well as by its end being geared in with a threading (56) added to the other square (50).

6. Device according to claims 2 to 5, characterised by the axle (72) of the roller (70) being riveted into the orifice (58) of the square (50).

7. Device according to one of the precedent claims, characterised by the roller (70) exceeding the supporting surface (20) by about 1mm.

8. Guide for the aligning station in a package producing machine, comprising a surface (20) destined to stop the upstream edge of the sheet in order to push and position the latter along the lengthwise axis of the processing machine, characterised by the guide (T) comprising a roller (70) of which a small peripheral portion exceeds the supporting surface (20) and has for purpose to act as a stop for the upstream edge of the sheet.
